# EUROPEAN PATENT APPLICATION

(11) **EP 4 507 029 A1**
(43) Date of publication of application: **12.02.2025**
(21) Application number: 23784189.5
(22) Date of filing: 27.03.2023
(51) Int. Cl.: H01M 4/36

(54) **POSITIVE ELECTRODE MATERIAL AND APPLICATION THEREOF**

(30) Priority: 06.04.2022 CN 202210353912
(71) Applicant: BYD Company Limited, Shenzhen, Guangdong 518118 (CN)
(72) Inventor: TIAN, Yecheng, Shenzhen, Guangdong 518118 (CN); HAO, Rong, Shenzhen, Guangdong 518118 (CN); ZHUANG, Minghao, Shenzhen, Guangdong 518118 (CN); GE, Liping, Shenzhen, Guangdong 518118 (CN); SU, Bizhe, Shenzhen, Guangdong 518118 (CN)
(74) Representative: Gunzelmann, Rainer
(86) International application number: PCT/CN2023/084093
(87) International publication number: WO 2023/193625

(57) **Abstract**

A positive electrode material and an application thereof. The positive electrode material comprises a secondary particle and a rock-salt phase cladding layer provided on the surface of the secondary particle; the secondary particle is formed by stacking multiple primary particles; the ratio of the particle size of the secondary particle to an average particle size of the multiple primary particles is greater than or equal to 1.5; and the primary particles and the rock-salt phase cladding layer respectively comprise a nickel-based active material.

## Description

### CROSS-REFERENCE TO RELATED APLICATIONS

The present disclosure claims priority to Chinese Patent Application No. 202210353912.1 filed on April 6, 2022 and entitled "POSITIVE ELECTRODE MATERIAL AND USE THEREOF" which is incorporated herein by reference in its entirety.

### FIELD

The present disclosure relates to the technical field of secondary batteries, and specifically to a positive electrode material and use thereof.

### BACKGROUND

Due to the advantages of high specific capacity, high energy density, environmental friendliness and good safety, nickel-based electrode active materials are considered as a promising positive electrode material for lithium ion batteries. However, nickel-based electrode active materials have low lithium ion diffusion coefficient, causing low charging and discharging efficiency of the material and poor electrochemical performance of the battery. Therefore, there is a need to improve the structure of the nickel-based electrode active materials, so as to improve the lithium ion migration performance of the nickel-based electrode active materials, and improve the electrochemical performance of the battery.

### SUMMARY

In a first aspect, the present disclosure provides a positive electrode material. The positive electrode material includes a secondary particle and a rock-salt phase cladding layer provided on the surface of the secondary particle. The secondary particle is formed by stacking multiple primary particles. The ratio of the particle size of the secondary particle to an average particle size of the multiple primary particles is greater than or equal to 1.5. The primary particles and the rock-salt phase cladding layer respectively include a nickel-based active material.

In some embodiments of the present disclosure, the nickel-based active material and the rock-salt phase cladding layer respectively include a material of chemical formula: Li₁₋ₐA_{b}(NiₘM₁₋ₘ)XₓO₂Z_{z}, where -0.1≤a≤0.1, A includes one or more of Na, K, Be, Mg, Ca, and B, 0≤b≤0.1, M includes one or more of Mn, Co, and Al, 0<m≤1, X includes one or more of Zr, V, Ti, Cr, Fe, Co, Ni, Zn, Nb, Mo, Os, W, and Y, 0≤x≤0.1, Z includes one or more of F, Cl, Br, and I, and 0≤z≤0.1.

In some embodiments of the present disclosure, the cladding rate of the rock-salt phase cladding layer on the surface of the secondary particle ranges from 10% to 90%.

In some embodiments of the present disclosure, when the cladding rate is less than or equal to 20%, the ratio r of the particle size of the secondary particle to the average particle size of the multiple primary particles meets 1.5≤r≤3.

When the cladding rate is greater than 20% and less than or equal to 50%, the ratio r of the particle size of the secondary particle to the average particle size of the multiple primary particles meets 3<r≤10.

When the cladding rate is greater than 50% and less than or equal to 80%, the ratio r of the particle size of the secondary particle to the average particle size of the multiple primary particles meets 10<r≤50.

When the cladding rate is greater than 80%, the ratio r of the particle size of the secondary particle to the average particle size of the multiple primary particles meets r>50.

In some embodiments of the present disclosure, the cladding rate of the rock-salt phase cladding layer on the surface of the secondary particle ranges from 50% to 80%.

In some embodiments of the present disclosure, the particle size of the secondary particle is less than or equal to 15 µm.

In some embodiments of the present disclosure, the thickness of the rock-salt phase cladding layer ranges from 1 nm to 20 nm.

In some embodiments of the present disclosure, the thickness of the rock-salt phase cladding layer ranges from 5 nm to 15 nm.

In some embodiments of the present disclosure, the nickel-based active material has a layered hexagonal close-packed structure, belonging to space group R3m; and in the X-ray diffraction pattern of the positive electrode material, the full width at half maximum of the diffraction peak of the (104) crystal plane of the positive electrode material is 0.1-0.2.

In some embodiments of the present disclosure, the full width at half maximum of the diffraction peak of the (104) crystal plane of the positive electrode material is 0.105-0.130.

In some embodiments of the present disclosure, the rock-salt phase cladding layer and the nickel-based active material respectively include doped or undoped lithium nickel cobalt manganese oxide.

In some embodiments of the present disclosure, the undoped lithium nickel cobalt manganese oxide has a chemical formula of Li(NiₘCoₙMn₁₋ₘ₋ₙ)O₂, where 0<m<1, 0<n<1, and 0<m+n<1.

In some embodiments of the present disclosure, the doping element in the doped lithium nickel cobalt manganese oxide includes one or more of Na, K, Be, Mg, Ca, B, Zr, V, Ti, Cr, Y, Fe, Co, Ni, Zn, Nb, Mo, Os, W, F, Cl, Br and I.

In some embodiments of the present disclosure, the doped or undoped lithium nickel cobalt manganese oxide has a chemical formula of Li₁₋ₐA_{b}(NiₘCoₙMn₁₋ₘ₋ₙ)XₓO₂Z_{z}, where -0.1≤a≤0.1, A includes one or more of Na, K, Be, Mg, Ca, and B, 0≤b≤0.1, X includes one or more of Zr, V, Ti, Cr, Fe, Co, Ni, Zn, Y, Nb, Mo, Os, and W, 0≤x≤0.1, Z includes one or more of F, Cl, Br, and I, and 0≤z≤0.1.

In a second aspect, the present disclosure provides a positive electrode sheet. The positive electrode sheet includes a current collector and a positive electrode material described in the first aspect provided on the current collector.

In a third aspect, the present disclosure provides a secondary battery, which includes a positive electrode and a negative electrode. The positive electrode includes a positive electrode sheet described in the second aspect.

In some embodiments of the present disclosure, the secondary battery further includes an electrolyte solution and a separator located between the positive electrode and the negative electrode.

In some embodiments of the present disclosure, the secondary battery further includes a solid electrolyte or a semi-solid electrolyte located between the positive electrode and the negative electrode.

In a fourth aspect, the present disclosure provides a vehicle. The vehicle includes a secondary battery described in the third aspect.

### BRIEF DESCRIPTION OF THE DRAWINGS

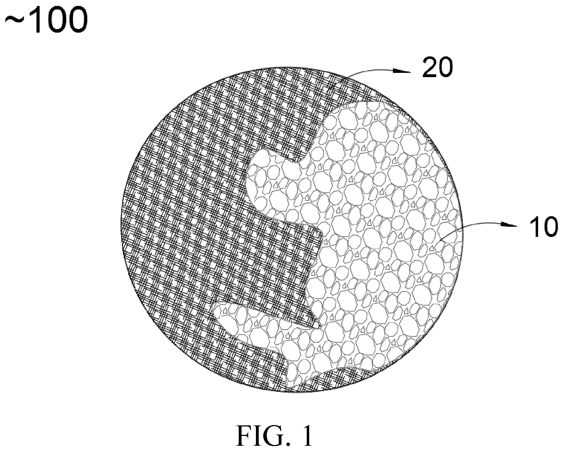

FIG. 1 is a schematic diagram showing the structure of a positive electrode material provided in an embodiment of the present disclosure;

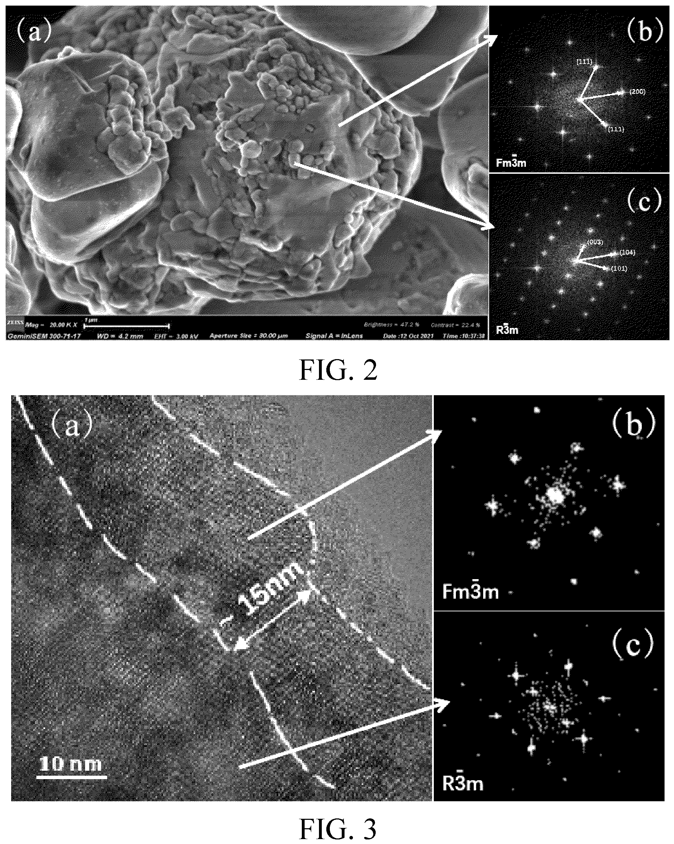

FIG. 2 is an electron microscopy image characterizing the surface of a positive electrode material provided in Example 4 of the present disclosure, in which FIG. 2(a) is a scanning electron microscopy image characterizing the morphology of the positive electrode material provided in Example 4, FIG. 2(b) is an HR-TEM Fourier transform spectrum of a rock-salt phase cladding layer in the positive electrode material provided in Example 4, and FIG. 2(c) is an HR-TEM Fourier transform spectrum of a core secondary particle in the positive electrode material provided in Example 4;
FIG. 3 is a transmission electron microscopy image characterizing a cross section of the positive electrode material provided in Example 4 of the present disclosure, in which FIG. 3(a) characterizes the cross section of the positive electrode material provided in Example 4, FIG. 3(b) is an HR-TEM Fourier transform spectrum of a rock-salt phase cladding layer in the positive electrode material provided in Example 4, and FIG. 3(c) is an HR-TEM Fourier transform spectrum of a core secondary particle in the positive electrode material provided in Example 4; and

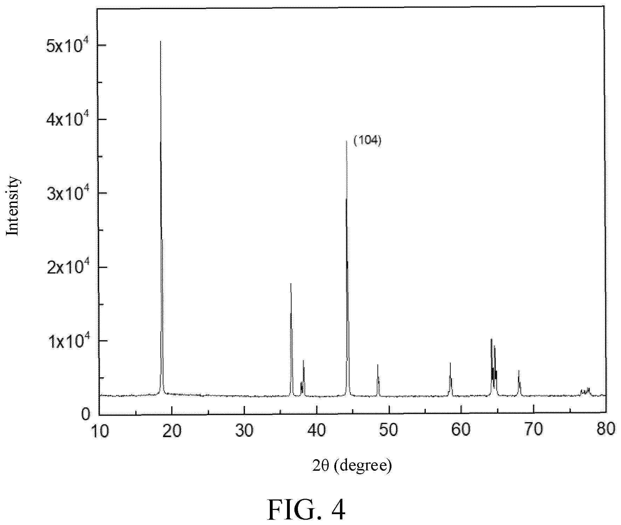

FIG. 4 is an XRD pattern of the positive electrode material provided in Example 4 of the present disclosure.

### DETAILED DESCRIPTION

The technical solution according to the embodiments of the present disclosure will be described in detail in below, in combination with the accompanying drawings in the embodiments of the present disclosure. Apparently, the embodiments described are merely some, but not all of the embodiments of the present disclosure. All other embodiments obtained by a person of ordinary skill in the art based on the embodiments of the present disclosure without creative efforts shall fall within the protection scope of the present invention.

The present disclosure provides a positive electrode material. The positive electrode material has a high lithium ion migration rate. When it is applied to a battery, the rate performance and capacity retention rate of the battery can be improved, which is conducive to the preparation of a secondary battery with high energy density.

Nickel-based electrode active materials are considered as a promising positive electrode material for lithium ion batteries due to high specific capacity. However, the lithium ion diffusion coefficient of nickel-based electrode active materials is low, the charging and discharging efficiency of the material is low, and the electrochemical performance of the battery is poor. To improve the lithium ion migration performance of nickel-based electrode active materials, and improve the electrochemical performance of the battery, the present disclosure provides a positive electrode material. FIG. 1 is a schematic diagram showing the structure of a positive electrode material provided in an embodiment of the present disclosure. In FIG. 1, a positive electrode material 100 includes a secondary particle 10 and a rock-salt phase cladding layer 20 provided on the surface of the secondary particle 10, where the secondary particle 10 is formed by stacking multiple primary particles. In an embodiment of the present disclosure, the ratio of the particle size of the secondary particle to the average particle size of the primary particles is greater than or equal to 1.5. The primary particles and the rock-salt phase cladding layer respectively include a nickel-based active material.

The positive electrode material of the present disclosure has a core-shell structure. In some embodiments, the core of the positive electrode material includes the secondary particle, and the shell of the positive electrode material includes the rock-salt phase cladding layer. In some embodiments of the present disclosure, the nickel-based active material includes a material of chemical formula Li₁₋ₐA_{b}(NiₘM₁₋ₘ)XₓO₂Z_{z}, where -0.1≤a≤0.1, A includes one or more of Na, K, Be, Mg, Ca, and B, 0≤b≤0.1, M includes one or more of Mn, Co, and Al, 0<m≤1, X includes one or more of Zr, V, Ti, Cr, Fe, Co, Ni, Zn, Nb, Mo, Os, W, and Y, 0≤x≤0.1, Z includes one or more of F, Cl, Br, and I, and 0≤z≤0.1. In the present disclosure, the secondary particle has a layered hexagonal close-packed structure, belonging to space group R3m; and crystal planes 003, 101 and 104 can be seen in the XRD pattern. In some embodiments of the present disclosure, the rock-salt phase cladding layer includes a material of chemical formula Li₁₋ₐA_{b}(NiₘM₁₋ₘ)XₓO₂Z_{z}, where - 0.1≤a≤0.1, A includes one or more of Na, K, Be, Mg, Ca, and B, 0≤b≤0.1, M includes one or more of Mn, Co, and Al, 0<m≤1, X includes one or more of Zr, V, Ti, Cr, Fe, Co, Ni, Zn, Nb, Mo, Os, W, and Y, 0≤x≤0.1, Z includes one or more of F, Cl, Br, and I, and 0≤z≤0.1. In the present disclosure, the structure of the rock-salt phase cladding layer belongs to space group Fm3m; and crystal planes 111 and 200 can be seen in the XRD pattern.

In the present disclosure, the structure of the secondary particle of the nickel-based active material can enrich the diffusion path of lithium ions, thus effectively improving the migration rate of lithium ions in the material. The rock-salt phase cladding layer can improve the electrolyte retention capacity of the positive electrode material, and ensure that the electrolyte solution can persistently infiltrate the positive electrode material, so as to realize the orderly diffusion of lithium ions. Moreover, the rock-salt phase cladding layer can inhibit the breakage of the secondary particle, to improve the structural stability of the positive electrode material. Particularly, in the charging and discharging process of the battery, lithium ions are constantly intercalated into and deintercalated from the secondary particle, primary particles in the secondary particle continuously experience expansion and contraction in volume, and the gaps between particles vary constantly. Consequently, the electrolyte solution between primary particles tends to generate bubbles. The existence of bubbles will block the migration path of lithium ions in the electrolyte solution, so that the lithium ion migration path is unstable and the lithium ion migration rate is reduced, resulting in a deteriorated rate performance of the material. The rock-salt phase cladding layer has high structural strength, and can arrest the volume change of the particles, to reduce the generation of bubbles, and improve the stability of lithium ion migration in the electrolyte solution. Also, the rock-salt phase cladding layer has good infiltration by the electrolyte solution. The electrolyte solution can infiltrate into the secondary particle by capillary effect, to improve the contact area between the electrolyte and the primary particles, which is beneficial to expanding the migration path of lithium ions, improving the lithium ion migration performance of Ni-Co-Mn ternary positive electrode material, and improving the electrochemical performance of the battery.

In the positive electrode material in the present disclosure, the secondary particle of the nickel-based active material is formed by stacking multiple primary particles of the nickel-based active material. The structure of the secondary particle expands the solid-solid transmission path of lithium ions in the nickel-based active material, and the secondary particle has a through pore structure, which facilitate the infiltration of the electrolyte solution, enrich the transmission paths of lithium ions, and improve the migration rate of ions. The rock-salt phase cladding layer can improve the electrolyte retention capacity of the positive electrode material, and ensure that the electrolyte solution can persistently infiltrate the secondary particle, to improve the lithium ion migration performance of the Ni-Co-Mn ternary positive electrode material, and improve the electrochemical performance of the battery.

In some embodiments of the present disclosure, the cladding rate of the rock-salt phase cladding layer on the surface of the secondary particle ranges from 10% to 90%. The cladding rate refers to the ratio of the cladding area of the rock-salt phase cladding layer on the surface of the secondary particle to the surface area of the secondary particle. The cladding rate of the rock-salt phase cladding layer on the surface of the secondary particle can be specifically, but is not limited to, 10%, 30%, 50%, 60%, 70%, 80% or 90%. By controlling the cladding rate of the rock-salt phase cladding layer, the cladding layer can provide favorable support for the secondary particle, the volume change of the secondary particle is suppressed, and the whole material is made to have good lithium ion migration performance. In some embodiments of the present disclosure, the cladding rate of the rock-salt phase cladding layer on the secondary particle is 50%-80%.

In some embodiments of the present disclosure, the thickness of the rock-salt phase cladding layer ranges from 1 nm to 20 nm. The thickness of the rock-salt phase cladding layer can be specifically, but is not limited to, 1nm, 3nm, 5nm, 10nm, 15nm or 20nm. By controlling the thickness of the rock-salt phase cladding layer, the electrolyte retention capacity of the positive electrode material is improved, so that the electrolyte solution can fully infiltrate the positive electrode. In some embodiments of the present disclosure, the thickness of the rock-salt phase cladding layer ranges from 5 nm to 15 nm.

The present inventors find that the cladding area of the rock-salt phase cladding layer is associated with the structure of the secondary particle to some extent, and the migration performance of lithium ions can be synergistically adjusted by them. In some embodiments of the present disclosure, when the cladding rate of the rock-salt phase cladding layer on the surface of the secondary particle is less than or equal to 20%, the ratio r of the particle size of the secondary particle to the average particle size of the primary particles ranges from 1.5 to 3, that is, 1.5≤r≤3. When the cladding rate of the rock-salt phase cladding layer on the surface of the secondary particle is greater than 20% and less than or equal to 50%, the ratio r of the particle size of the secondary particle to the average particle size of the primary particles is greater than 3 and less than or equal to 10, that is, 3<r≤10. When the cladding rate of the rock-salt phase cladding layer on the surface of the secondary particle is greater than 50% and less than or equal to 80%, the ratio r of the particle size of the secondary particle to the average particle size of the primary particles is greater than 10 and less than or equal to 50, that is, 10<r≤50. When the cladding rate of the rock-salt phase cladding layer on the surface of the secondary particle is greater than 80%, the ratio r of the particle size of the secondary particle to the average particle size of the primary particles is greater than 50, that is r > 50. Namely, for a single positive electrode material particle, when the cladding rate of the rock-salt phase cladding layer is less than or equal to 20%, the particle size of the secondary particle is 1.5-3 times of the average particle size of the primary particles. For example, when n primary particles are stacked to form the secondary particle, the average particle size of the n primary particles is x µm, and the particle size of the secondary particle is y µm, then y/x=1.5-3 when the cladding rate of the rock-salt phase cladding layer is less than or equal to 20%. The study in the present disclosure finds that when the particle size difference between the secondary particle and the primary particles is large, the migration rate of lithium ions can be effectively improved. However, the volume change of the secondary particle is obvious, and bubbles tend to generate between primary particles. The rock-salt phase cladding layer can effectively suppress the generation of bubbles and ensure that the electrolyte solution can be brought full contact with the primary particles, whereby lithium ions can migrate orderly and have a high transmission rate. However, a too high cladding rate affects the rate performance of the electrode material. Therefore, for a certain structure of the secondary particle, by controlling the cladding rate of the rock-salt phase cladding layer, the material can have good lithium ion migration performance, that is, the material has a high lithium ion migration rate, and lithium ions can migrate in order, so the material has good cycle stability.

In some embodiments of the present disclosure, the average particle size of the secondary particle is less than or equal to 15 µm. The average particle size of the secondary particle may be specifically, but is not limited to, 0.1µm, 0.5µm, 1µm, 2µm, 5µm, 10µm, 11µm, 13µm or 15µm.

In some embodiments of the present disclosure, the primary particles are closely stacked to form the secondary particle. In the X-ray diffraction pattern of the positive electrode material, the full width at half maximum FWHM of the diffraction peak of the 104 crystal plane of the positive electrode material ranges from 0.1 to 0.2. The full width at half maximum FWHM of the diffraction peak of the 104 crystal plane of the positive electrode material may specifically include, but is not limited to, 0.1, 0.105, 0.11, 0.12, 0.13, 0.15 or 0.2. When the full width at half maximum FWHM of the diffraction peak of the 104 crystal plane of the positive electrode material ranges from 0.1 to 0.2, a secondary battery with high energy density can be prepared. In some embodiments of the present disclosure, in the X-ray diffraction pattern of the positive electrode material, the full width at half maximum FWHM of the diffraction peak of the 104 crystal plane ranges from 0.105 to 0.13.

In some embodiments of the present disclosure, when a=0, b=0, x=0, and z=0, the nickel-based active material includes a material of chemical formula Li(NiₘM₁₋ₘ)O₂. In some embodiments of the present disclosure, the nickel-based active material contains a lithium-site doping element, and the lithium-site doping element partially replaces the lithium atom in the Li(NiₓM₁₋ₓ)O₂. The lithium-site doping element is A in the chemical formula Li₁₋ₐA_{b}(NiₘM₁₋ₘ)XₓO₂Z_{z}, that is, in the chemical formula b>0. The lithium-site doping element includes one or more of Na, K, Be, Mg, Ca, and B. The lithium-site doping element can improve the migration rate of lithium ions in the crystal lattice of rock-salt phase cladding layer and nickel-based active material. In some embodiments of the present disclosure, the nickel-based active material contains a transition metal doping element. The transition metal doping element is X in the chemical formula Li₁₋ₐA_{b}(NiₘM₁₋ₘ)XₓO₂Z_{z}, that is, in the chemical formula x>0. The transition metal doping element includes one or more of Zr, V, Ti, Cr, Y, Fe, Co, Ni, Zn, Nb, Mo, Os, and W. The transition metal doping element can improve the stability of the positive electrode material in the electrolyte solution, inhibit the intermixing of lithium and nickel, and improve the conductivity of lithium ions in the solid phase. In some embodiments of the present disclosure, the nickel-based active material contains an oxygen-site doping element. The oxygen-site doping element is Z in the chemical formula Li₁₋ₐA_{b}(NiₘM₁₋ₘ)XₓO₂Z_{z}, that is, in the chemical formula, z>0. The oxygen-site doping element partially replaces oxygen atom in Li(NiₓM₁₋ₓ)O₂. The oxygen-site doping element includes one or more of F, Cl, Br, and I. The oxygen-site doping element can improve the structural stability of the rock-salt phase cladding layer and the nickel-based active material.

In some embodiments of the present disclosure, the rock-salt phase cladding layer and the nickel-based active material respectively include doped or undoped lithium nickel cobalt manganese oxide. The undoped lithium nickel cobalt manganese oxide has a chemical formula of Li(NiₘCoₙMn₁₋ₘ₋ₙ)O₂, where 0<m<1, 0<n<1, and 0<m+n<1. In some embodiments of the present disclosure, the doping element in the doped lithium nickel cobalt manganese oxide comprises one or more of Na, K, Be, Mg, Ca, B, Zr, V, Ti, Cr, Y, Fe, Co, Ni, Zn, Nb, Mo, Os, W, F, Cl, Br and I. The doping element can improve the structural stability of the rock-salt phase cladding layer and improve the lithium ion migration rate of the lithium nickel cobalt manganese oxide. In some embodiments of the present disclosure, the doped or undoped lithium nickel cobalt manganese oxide has a chemical formula of Li₁₋ₐA_{b}(NiₘCoₙMn₁₋ₘ₋ₙ)XₓO₂Z_{z}, where -0.1≤a≤0.1, A includes one or more of Na, K, Be, Mg, Ca, and B, 0≤b≤0.1, X includes one or more of Zr, V, Ti, Cr, Fe, Co, Ni, Zn, Y, Nb, Mo, Os, and W, 0≤x≤0.1, Z includes one or more of F, Cl, Br, and I, and 0≤z≤0.1.

The positive electrode material provided in the present disclosure effectively enriches the migration path of lithium ions and improves the migration rate of lithium ions by the structures of the secondary particle and the rock salt phase cladding layer. The positive electrode material with such a structure can reduce the impedance of the battery to realize high-rate charge and discharge. When it is applied to a secondary battery, the capacity and cycle performance of the secondary battery can be improved, which is conducive to the long-term use of the battery.

The present disclosure further provides a method for preparing the positive electrode material. The method includes the following steps.

A nickel-cobalt-manganese hydroxide is mixed with a lithium source, and sintered in an oxygen-containing atmosphere, to obtain the positive electrode material. The oxygen content in the oxygen-containing atmosphere ranges 18% to 100%.

In some embodiments of the present disclosure, a preparation method of the nickel-cobalt-manganese hydroxide includes the following steps. A nickel source, a cobalt source and a manganese source are dispersed in an alkaline solution, to obtain the nickel-cobalt-manganese hydroxide. The pH value of the alkaline solution range from 9 to 14. The alkaline solution includes one or more of an aqueous sodium hydroxide solution, an aqueous potassium hydroxide solution and aqueous ammonia. The nickel source includes one or more of nickel nitrate, nickel sulfate and nickel chloride. The cobalt source includes one or more of cobalt nitrate, cobalt sulfate and cobalt chloride. The manganese source includes one or more of manganese nitrate, manganese sulfate and manganese chloride. In some embodiments of the present disclosure, a preparation method of the nickel-cobalt-manganese hydroxide includes the following steps. A nickel source, a cobalt source and a manganese source are dispersed in an alkaline solution at a molar ratio of (5-10): (0.5-1.5): (0.5-1.5), stirred at 25°C-45°C and 5 rpm-100 rpm for 360 min-1080 min.

In some embodiments of the present disclosure, the lithium source includes one or more of lithium carbonate, lithium hydroxide, lithium nitrate, lithium oxalate and lithium acetate. In some embodiments of the present disclosure, a nickel-cobalt-manganese hydroxide and the lithium source are mixed at a molar ratio of 1: (0.9-1.2), and then a doping element is added into the mixture, where the doping element includes one or more of a lithium-site doping element, a transition metal doping element and an oxygen-site doping element. In the present disclosure, the content of oxygen in the oxygen-containing atmosphere affects the structure of the rock-salt phase cladding layer. By controlling the oxygen content in the oxygen-containing atmosphere, a rock-salt phase cladding layer with stable structure can be formed, the adhesion strength of the rock-salt phase cladding layer to the secondary particle is improved, and the positive electrode material is made to have good and stable electrolyte retention ability. In some embodiments of the present disclosure, the oxygen content in the oxygen-containing atmosphere ranges from 19% to 95% by weight. The oxygen content in the oxygen-containing atmosphere may specifically be, but is not limited to, 18%, 20%, 25%, 30%, 50%, 60%, 70%, 80%, 90% or 100%, by weight.

In some embodiments of the present disclosure, the sintering temperature ranges from 200°C to 980°C. The sintering temperature may specifically be, but is not limited to, 200°C, 300°C, 500°C, 600°C, 700°C, 750°C, 800°C, 850°C, 900°C or 980°C. In some embodiments of the present disclosure, the sinter time ranges from 8 h to 32 h. The sintering time may specifically be, but is not limited to 8h, 10h, 15h, 20h, 25h, 30h or 32h. In some embodiments of the present disclosure, the calcinating temperature ranges from 700°C to 1000°C, and the calcinating time ranges from 12h to 36h. By controlling the calcinating time and temperature, a closely stacked secondary particle structure and a rock-salt phase cladding layer stably cladded on the surface of the secondary particle can be formed. In some embodiments of the present disclosure, the sintering equipment can be any one of a rotary furnace, a revolving furnace, a box furnace, a tube furnace, a roller kiln, a pusher kiln or a fluidized bed..

In some embodiments of the present disclosure, the nickel-cobalt-manganese hydroxide and the lithium source are sintered by gradient heating. The gradient heating is as follows: The nickel-cobalt-manganese hydroxide and the lithium source are heated up to 720°C at a heating rate of 10°C/min or less and held at this temperature for 1h to 9h, and then heated up to 1000°C at a heating rate of 15°C/min or less and held at this temperature for 8 h to 25h to obtain the positive electrode material. In some embodiments of the present disclosure, The gradient heating is as follows: The nickel-cobalt-manganese hydroxide and the lithium source are heated up to 500°C at a heating rate of 10°C/min or less and held at this temperature for 2h to 9h, and then heated up to 850°C at a heating rate of 13.3°C/min or less and held at this temperature for 8 h to 25h to obtain the positive electrode material.

The present disclosure further provides a positive electrode sheet. The positive electrode sheet includes a current collector and a positive electrode material layer provided on the current collector. The positive electrode material layer includes a positive electrode material according to the present disclosure. In the present disclosure, the positive electrode material layer can be prepared by mixing and slurring the positive electrode material, a conductive agent, a binder and a solvent into a positive electrode slurry, coating the positive electrode slurry and drying, to obtain the positive electrode material layer. In the preparation of the positive electrode slurry, the binder may be mixed with the solvent firstly, and fully stirred, the conductive agent is added and stirred, and then the positive electrode material is added, stirred, and sieved to obtain the positive electrode slurry. The conductive agent, the binder, and the solvent are conventional choices in the battery field. For example, the binder can be one or more selected from polyvinylidene fluoride (PVDF), polytetrafluoroethylene (PTFE), polyvinyl alcohol (PVA), styrene-butadiene rubber (SBR), polyacrylonitrile (PAN), polyimide (PI), polyacrylic acid (PAA), polyacrylate, polyalkene, sodium carboxymethyl cellulose (CMC) and sodium alginate. The conductive agent can be one or more selected from carbon nanotubes, carbon black and graphene.

The present disclosure further provides a secondary battery. The secondary battery includes a positive electrode, a negative electrode, an electrolyte solution, and a separator located between the positive electrode and the negative electrode. Alternatively, the secondary battery includes a positive electrode, a negative electrode and a solid electrolyte or semi-solid electrolyte located between the positive electrode and the negative electrode. The positive electrode includes the positive electrode sheet provided in the present disclosure.

In the present disclosure, the negative electrode of the secondary battery can be any negative electrode known in the art. In an embodiment of the present disclosure, the negative electrode may include one or more of a carbon-based negative electrode, a silicon-based negative electrode, a tin-based negative electrode and a lithium negative electrode. The carbon-based negative electrode can include graphite, hard carbon, soft carbon, and graphene, etc. The silicon-based negative electrode may include a silicon-containing material such as silicon, silicon carbide, silicon oxide, or a silicon metal compound, etc. or a mixed material of this silicon-containing material with a non-silicon-containing material such as graphite. The tin-based negative electrode may include a tin-containing material such as tin, tin carbide, tin oxide, or a tin metal compound, etc. or a mixed material of this tin-containing material with a non-tin-containing material such as graphite. The lithium negative electrode may include metallic lithium or a lithium alloy. The lithium alloy may be specifically at least one of a lithium silicon alloy, a lithium sodium alloy, a lithium potassium alloy, a lithium aluminum alloy, a lithium tin alloy and a lithium indium alloy. In some embodiments of the present disclosure, the negative electrode current collector is a copper foil. The negative electrode active material includes one or more of natural graphite, artificial graphite, hard carbon, soft carbon, lithium titanate, iron oxide, lithium titanium phosphate, titania, silicon, silicon monooxide, tin and its oxide, and antimony and its oxide. The binder includes one or more of polyacrylic acid (PAA), polyvinylidene fluoride (PVDF), carboxymethyl cellulose (CMC) and styrene-butadiene rubber (SBR). The conductive agent includes one or more of acetylene black, Keqin carbon black, Super-P, carbon nanotubes, carbon nanofibers, activated carbon and graphene. In the present disclosure, the preparation method of the negative electrode can be any method known in the art.

In the present disclosure, the separator of the secondary battery can be any separator known to those skilled in the art. For example, the separator can be one or more of microporous polyolefin membrane, polyethylene terephthalate, polyethylene felt, glass fiber felt or superfine glass fiber paper.

In the present disclosure, the electrolyte solution of the secondary battery includes a solution of an electrolyte lithium salt in a non-aqueous solvent. In an embodiment of the present disclosure, the electrolyte lithium salt includes one or more of lithium hexafluorophosphate (LiPF₆), lithium perchlorate (LiClO₄), lithium tetrafluoroborate (LiBF₄), lithium hexafluoroarsenate (LiAsF₆), lithium hexafluorosilicate (Li₂SiF₆), lithium tetraphenylborate (LiB(C₆H5)₄), lithium chloride (LiCl), lithium bromide (LiBr), lithium chloroaluminate (LiAlCl₄), lithium fluoroalkyl sulfonate (LiC(SO₂CF₃)₃), LiCH₃SO₃, LiN(SO₂CF₃)₂, and LiN(SO₂C₂F₅)₂. In some embodiments of the present disclosure, the non-aqueous solvent includes one or more of a chain acid ester and a cyclic acid ester. In some embodiments of the present disclosure, the chain acid ester includes one or more of dimethyl carbonate (DMC), diethyl carbonate (DEC), methyl ethyl carbonate (EMC), methyl propyl carbonate (MPC) and dipropyl carbonate (DPC). In some embodiments of the present disclosure, the chain acid ester include a chain organic ester containing fluorine, sulfur or an unsaturated bond. In some embodiments of the present disclosure, the cyclic acid ester includes one or more of ethylene carbonate (EC), propylene carbonate (PC), vinylene carbonate (VC), γ-butyrolactone (γ-BL) and sulfolactone. In some embodiments of the present disclosure, the cyclic acid ester includes a cyclic organic ester containing fluorine, sulfur or an unsaturated bond. In some embodiments of the present disclosure, the non-aqueous solvent includes one or more of a chain ether and a cyclic ether solution. In some embodiments of the present disclosure, the cyclic ether includes one or more of tetrahydrofuran (THF), 2-methyltetrahydrofuran (2-MeTHF), 1,3-dioxolane (DOL) and 4-methyl-1,3-dioxolane (4-MeDOL). In some embodiments of the present disclosure, the cyclic ether includes a cyclic organic ether containing fluorine, sulfur or an unsaturated bond. In some embodiments of the present disclosure, the chain ether includes one or more of dimethoxymethane (DMM), 1,2-dimethoxyethane (DME), 1,2-dimethoxypropane (DMP), and diethylene glycol dimethyl ether (DG). In some embodiments of the present disclosure, the chain ether includes a chain organic ether containing fluorine, sulfur or an unsaturated bond. In an embodiment of the present disclosure, the concentration of the electrolyte lithium salt in the electrolyte solution is 0.1 mol/L-15 mol/L. In some embodiments of the present disclosure, the concentration of the electrolyte lithium salt is 1 mol/L-10 mol/L.

In an embodiment of the present disclosure, the secondary battery can be prepared by a lamination process or a winding process. In some embodiments of the present disclosure, the battery is prepared by the lamination process.

The present disclosure further provides a vehicle. The vehicle includes a secondary battery provided in the present disclosure, and the vehicle is powered by the secondary battery.

The technical solution of the present disclosure is further explained in several embodiments.

### Example 1

A positive electrode material was prepared by a process including the following steps.

Nickel nitrate, cobalt nitrate and manganese sulfate at a molar ratio of 6:2:2 were added into a sodium hydroxide aqueous solution (pH 11), stirred at 50 rpm and 30°C, and then filtered to obtain a nickel-cobalt-manganese hydroxide. The nickel-cobalt-manganese hydroxide was mixed with lithium hydroxide and yttrium oxide and sintered in an oxygen-containing atmosphere with an oxygen content of 22% by weight, by heating to 500°C at a heating rate of 10°C/min and holding at this temperature for 4 hrs, and then heating to 850°C at a heating rate of 13.3°C/min and holding at this temperature for 16 hrs to obtain a positive electrode material. The positive electrode material includes a core secondary particle and a rock-salt phase cladding layer. The core secondary particle and the rock-salt phase cladding layer have a chemical formula of LiNi_{0.60}Co_{0.20}Mn_{0.20}Y_{0.02}O₂.

The prepared positive electrode material, a conductive agent and a binder at a weight ratio of 95: 3: 2 were dispersed in N-methylpyrrolidone to obtain a positive electrode slurry. The conductive agent was conductive carbon black, and the binder was PVDF. The positive electrode slurry was coated on the surface of an aluminum foil with a thickness of 20 um, dried and rolled, to obtain a positive electrode with a positive electrode active material layer having a compaction density of 3.4 g/cm³. Graphite, carboxymethyl cellulose and conductive carbon black at a ratio of 95: 3: 2 were dispersed in N-methylpyrrolidone to obtain a negative electrode slurry. The negative electrode slurry was coated on the surface of a copper foil, dried and rolled to obtain a negative electrode with a negative electrode active material layer having a compaction density of 1.4 g/cm³. The prepared positive electrode, the prepared negative electrode and a microporous polyolefin membrane were wound to prepare a battery core. After packaging, an electrolyte solution containing 1 mol/L lithium hexafluorophosphate (the solvent was 1:1 EC:EMC) was injected to obtain a battery. The battery in Example 1 was designated as S1.

### Example 2

A positive electrode material was prepared through a process including the following steps in Example 2.

Nickel sulfate, cobalt sulfate and manganese sulfate at a molar ratio of 5:2:3 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide and sintered in an oxygen-containing atmosphere with an oxygen content of 21% by weight, by heating to 550°C at a heating rate of 10°C/min and holding at this temperature for 4 hrs, then heating to 900°C at a heating rate of 13.3°C/min and holding at this temperature for 14 hrs to obtain a positive electrode material. The positive electrode material includes a core secondary particle and a rock-salt phase cladding layer. The core secondary particle and the rock-salt phase cladding layer have a chemical formula of LiNi_{0.50}Co_{0.20}Mn_{0.30}O₂.

A secondary battery was prepared by the method described in Example 1. The battery in Example 2 was designated as S2.

### Example 3

A positive electrode material was prepared through a process including the following steps in Example 3.

Nickel sulfate, cobalt sulfate and manganese sulfate at a molar ratio of 8:1:1 were added into a sodium hydroxide aqueous solution (pH 12), stirred at 50 rpm and 30°C, and then filtered to obtain a nickel-cobalt-manganese hydroxide. The nickel-cobalt-manganese hydroxide was mixed with lithium hydroxide and yttrium oxide and sintered in an oxygen-containing atmosphere with an oxygen content of 35% by weight, by heating to 480°C at a heating rate of 10°C/min and holding at this temperature for 3 hrs, then heating to 700°C at a heating rate of 13.3°C/min and holding at this temperature for 22 hrs to obtain a positive electrode material. The positive electrode material includes a core secondary particle and a rock-salt phase cladding layer. The core secondary particle and the rock-salt phase cladding layer have a chemical formula of LiNi_{0.8}Co_{0.1}Mn_{0.1}Y_{0.02}O₂.

A secondary battery was prepared by the method described in Example 1. The battery in Example 3 was designated as S3.

### Example 4

A positive electrode material was prepared through a process including the following steps in Example 4.

Nickel sulfate, cobalt sulfate and manganese sulfate at a molar ratio of 6:2:2 were added into a sodium hydroxide aqueous solution (pH 11), stirred at 50 rpm and 30°C, and then filtered to obtain a nickel-cobalt-manganese hydroxide. The nickel-cobalt-manganese hydroxide was mixed with lithium hydroxide and sintered in an oxygen-containing atmosphere with an oxygen content of 30% by weight, by heating to 700°C at a heating rate of 10°C/min and holding at this temperature for 6 hrs, and then heating to 850°C at a heating rate of 13.3°C/min and holding at this temperature for 13 hrs to obtain a positive electrode material. The positive electrode material includes a core secondary particle and a rock-salt phase cladding layer. The core secondary particle and the rock-salt phase cladding layer have a chemical formula of LiNi_{0.60}Co_{0.20}Mn_{0.20}O₂.

A secondary battery was prepared by the method described in Example 1. The battery in Example 4 was designated as S4.

### Example 5

A positive electrode material was prepared through a process including the following steps in Example 5.

Nickel sulfate, cobalt sulfate and manganese sulfate at a molar ratio of 8:1:1 were added into a sodium hydroxide aqueous solution (pH 12), stirred at 50 rpm and 30°C, and then filtered to obtain a nickel-cobalt-manganese hydroxide. The nickel-cobalt-manganese hydroxide was mixed with lithium hydroxide and sodium chloride and sintered in an oxygen-containing atmosphere with an oxygen content of 50% by weight, by heating to 550°C at a heating rate of 10.2°C/min and holding at this temperature for 6 hrs, and then heating to 850°C at a heating rate of 13.8°C/min and holding at this temperature for 14 hrs to obtain a positive electrode material. The positive electrode material includes a core secondary particle and a rock-salt phase cladding layer. The core secondary particle and the rock-salt phase cladding layer have a chemical formula of Li_{0.99}Na_{0.01}Ni_{0.8}Co_{0.1}Mn_{0.1}O₂Cl_{0.1}.

A secondary battery was prepared by the method described in Example 1. The battery in Example 5 was designated as S5.

### Example 6

A positive electrode material was prepared through a process including the following steps in Example 6.

Nickel sulfate, cobalt sulfate and manganese sulfate at a molar ratio of 8:1:1 were added into a sodium hydroxide aqueous solution (pH 12), stirred at 50 rpm and 30°C, and then filtered to obtain a nickel-cobalt-manganese hydroxide. The nickel-cobalt-manganese hydroxide was mixed with lithium hydroxide and elemental iodine and sintered in an oxygen-containing atmosphere with an oxygen content of 60% by weight, by heating to 650°C at a heating rate of 11°C/min and holding at this temperature for 3 hrs, and then heating to 930°C at a heating rate of 13.8°C/min and holding at this temperature for 15 hrs to obtain a positive electrode material. The positive electrode material includes a core secondary particle and a rock-salt phase cladding layer. The core secondary particle and the rock-salt phase cladding layer have a chemical formula of LiNi_{0.8}Co_{0.1}Mn_{0.1}O₂I_{0.1}.

A secondary battery was prepared by the method described in Example 1. The battery in Example 6 was designated as S6.

### Example 7

A positive electrode material was prepared through a process including the following steps in Example 7.

Nickel sulfate, cobalt sulfate and manganese sulfate at a molar ratio of 8:1:1 were added into a sodium hydroxide aqueous solution (pH 12), stirred at 50 rpm and 30°C, and then filtered to obtain a nickel-cobalt-manganese hydroxide. The nickel-cobalt-manganese hydroxide was mixed with lithium hydroxide and nano-boron oxide and sintered in an oxygen-containing atmosphere with an oxygen content of 90% by weight, by heating to 700°C at a heating rate of 13.3°C/min and holding at this temperature for 6 hrs, and then heating to 880°C at a heating rate of 13.3°C/min and holding at this temperature for 19 hrs to obtain a positive electrode material. The positive electrode material includes a core secondary particle and a rock-salt phase cladding layer. The core secondary particle and the rock-salt phase cladding layer have a chemical formula of LiB_{0.02}Ni_{0.8}Co_{0.1}Mn_{0.1}O₂.

A secondary battery was prepared by the method described in Example 1. The battery in Example 7 was designated as S7.

### Example 8

A positive electrode material was prepared through a process including the following steps in Example 8.

Nickel sulfate, cobalt sulfate and manganese sulfate at a molar ratio of 8:1:1 were added into a sodium hydroxide aqueous solution (pH 12), stirred at 50 rpm and 30°C, and then filtered to obtain a nickel-cobalt-manganese hydroxide. The nickel-cobalt-manganese hydroxide was mixed with lithium hydroxide and lithium fluoride, and sintered in an oxygen-containing atmosphere with an oxygen content of 90% by weight, by heating to 550°C at a heating rate of 10.3°C/min and holding at this temperature for 4 hrs, and then heating to 960°C at a heating rate of 13.3°C/min and holding at this temperature for 15 hrs to obtain a positive electrode material. The positive electrode material includes a core secondary particle and a rock-salt phase cladding layer. The core secondary particle and the rock-salt phase cladding layer have a chemical formula of LiNi_{0.80}Co_{0.10}Mn_{0.10}O₂F_{0.05}.

A secondary battery was prepared by the method described in Example 1. The battery in Example 8 was designated as S8.

### Example 9

A positive electrode material was prepared through a process including the following steps in Example 9.

Nickel sulfate, cobalt sulfate and manganese sulfate at a molar ratio of 8:1:1 were added into a sodium hydroxide aqueous solution (pH 12), stirred at 50 rpm and 30°C, and then filtered to obtain a nickel-cobalt-manganese hydroxide. The nickel-cobalt-manganese hydroxide was mixed with lithium hydroxide and sodium fluoride and sintered in an oxygen-containing atmosphere with an oxygen content of 90% by weight, by heating to 440°C at a heating rate of 11.2°C/min and holding at this temperature for 8 hrs, and then heating to 860°C at a heating rate of 13.3°C/min and holding at this temperature for 20 hrs to obtain a positive electrode material. The positive electrode material includes a core secondary particle and a rock-salt phase cladding layer. The core secondary particle and the rock-salt phase cladding layer have a chemical formula of Li_{0.99}Na_{0.01}Ni_{0.8}Co_{0.1}Mn_{0.1}O₂F_{0.1}.

A secondary battery was prepared by the method described in Example 1. The battery in Example 9 was designated as S9.

### Example 10

A positive electrode material was prepared through a process including the following steps in Example 10.

Nickel sulfate, cobalt sulfate and manganese sulfate at a molar ratio of 4:3:3 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide and sintered in an oxygen-containing atmosphere with an oxygen content of 19% by weight, by heating to 580°C at a heating rate of 10.8°C/min and holding at this temperature for 2 hrs, and then heating to 990°C at a heating rate of 13.3°C/min and holding at this temperature for 17 hrs to obtain a positive electrode material. The positive electrode material includes a core secondary particle and a rock-salt phase cladding layer. The core secondary particle and the rock-salt phase cladding layer have a chemical formula of LiNi_{0.40}Co_{0.30}Mn_{0.30}O₂.

A secondary battery was prepared by the method described in Example 1. The battery in Example 10 was designated as S10.

### Example 11

A positive electrode material was prepared through a process including the following steps in Example 11.

Nickel sulfate, cobalt sulfate and manganese sulfate at a molar ratio of 1:1:1 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide, beryllium fluoride and lithium fluoride and sintered in an oxygen-containing atmosphere with an oxygen content of 19% by weight, by heating to 550°C at a heating rate of 10°C/min and holding at this temperature for 4 hrs, and then heating to 980°C at a heating rate of 14.1°C/min and holding at this temperature for 16 hrs to obtain a positive electrode material. The positive electrode material includes a core secondary particle and a rock-salt phase cladding layer. The core secondary particle and the rock-salt phase cladding layer have a chemical formula of Li_{0.99}Be_{0.01}Ni_{1/3}Co_{1/3}Mn_{1/3}O₂F_{0.05}.

A secondary battery was prepared by the method described in Example 1. The battery in Example 11 was designated as S11.

### Example 12

A positive electrode material was prepared through a process including the following steps in Example 12.

Nickel sulfate, cobalt sulfate and manganese sulfate at a molar ratio of 8:1:1 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide and yttrium fluoride and sintered in an oxygen-containing atmosphere with an oxygen content of 85% by weight, by heating to 550°C at a heating rate of 10°C/min and holding at this temperature for 8 hrs, and then heating to 800°C at a heating rate of 13.3°C/min and holding at this temperature for 20 hrs to obtain a positive electrode material. The positive electrode material includes a core secondary particle and a rock-salt phase cladding layer. The core secondary particle and the rock-salt phase cladding layer have a chemical formula of Li_{1.01}Ni_{0.8}Co_{0.1}Mn_{0.1}Y_{0.01}O₂F_{0.05}.

A secondary battery was prepared by the method described in Example 1. The battery in Example 12 was designated as S12.

### Comparative Example 1

A positive electrode material was prepared through a process including the following steps in Comparative Example 1.

Nickel sulfate, cobalt sulfate and manganese sulfate at a molar ratio of 8:1:1 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide and lithium fluoride, and sintered in an oxygen-containing atmosphere with an oxygen content of 5% by weight, by heating to 550°C at a heating rate of 10°C/min and holding at this temperature for 8 hrs, and then heating to 950°C at a heating rate of 13.3°C/min and holding at this temperature for 18 hrs to obtain a positive electrode material. The positive electrode material includes a nickel-based active material, having no rock-salt phase cladding layer on the surface, and the nickel-based active material has a chemical formula of LiNi_{0.8}Co_{0.1}Mn_{0.1}O₂F_{0.1}.

A secondary battery was prepared by the method described in Example 1. The battery in Comparative Example 1 was designated as D1.

### Comparative Example 2

A positive electrode material was prepared through a process including the following steps in Comparative Example 2.

Nickel sulfate, cobalt sulfate and manganese sulfate at a molar ratio of 8:1:1 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide and sodium fluoride and sintered in an oxygen-containing atmosphere with an oxygen content of 10% by weight, by heating to 550°C at a heating rate of 10°C/min and holding at this temperature for 4 hrs, and then heating to 900°C at a heating rate of 13.3°C/min and holding at this temperature for 14 hrs to obtain a positive electrode material. The positive electrode material includes a nickel-based active material, having no rock-salt phase cladding layer on the surface, and the nickel-based active material has a chemical formula of Li_{0.99}Na_{0.01}Ni_{0.8}Co_{0.1}Mn_{0.1}O₂F_{0.1}.

A secondary battery was prepared by the method described in Example 1. The battery in Comparative Example 2 was designated as D2.

### Comparative Example 3

A positive electrode material was prepared through a process including the following steps in Comparative Example 3.

Nickel sulfate, cobalt sulfate and manganese sulfate at a molar ratio of 8:1:1 were added into a sodium hydroxide aqueous solution (pH 10), stirred at 50 rpm and 30°C, and then filtered to obtain a nickel-cobalt-manganese hydroxide. The nickel-cobalt-manganese hydroxide was mixed with lithium hydroxide, zirconia and sodium carbonate and sintered in an oxygen-containing atmosphere with an oxygen content of 70% by weight, at a sintering temperature of 840°C and for a sintering time of 22 hrs, to obtain a positive electrode material. The positive electrode material includes a core secondary particle and a rock-salt phase cladding layer. The core secondary particle and the rock-salt phase cladding layer have a chemical formula of Li_{0.99}Na_{0.01}Ni_{0.8}Co_{0.1}Mn_{0.1}Zr_{0.02}O₂.

A secondary battery was prepared by the method described in Example 1. The battery in Comparative Example 3 was designated as D3.

### Effect Example

To verify the performances of the positive electrode material and battery prepared in the present disclosure, the present disclosure also provides effect examples.

FIG. 2 is a scanning electron microscopy image characterizing a positive electrode material provided in Example 4 of the present disclosure, where FIG. 2(a) characterizes the morphology of the positive electrode material provided in Example 4, FIG. 2(b) is an HR-TEM Fourier transform spectrum of a rock-salt phase cladding layer in the positive electrode material provided in Example 4, and FIG. 2(c) is an HR-TEM Fourier transform spectrum of a core secondary particle in the positive electrode material provided in Example 4. FIG. 2 can reflect the surface morphology information of the positive electrode material. It can be seen from FIG. 2 that in the positive electrode material of Example 4, the cladding rate of the rock-salt phase cladding layer is about 37%, the average particle size of the primary particles is 1.89 µm, the particle size of the secondary particle is 8.12 µm, and the diameter ratio of the secondary particle to the primary particle is 4.3. As can be seen from the crystal plane analysis, the rock-salt phase cladding layer belongs to the space group Fm3m, and the secondary particle belongs to the space group R3m. FIG. 3 is a transmission electron microscopy image characterizing a cross section of the positive electrode material provided in Example 4 of the present disclosure, in which FIG. 3(a) characterizes the cross section of the positive electrode material provided in Example 4, FIG. 3(b) is an HR-TEM Fourier transform spectrum of a rock-salt phase cladding layer in the positive electrode material provided in Example 4, and FIG. 3(c) is an HR-TEM Fourier transform spectrum of a core secondary particle in the positive electrode material provided in Example 4. It can be seen from FIG. 3 that in the positive electrode material of Example 4, the thickness of the rock-salt phase cladding layer is 15 nm. The positive electrode materials of each example and comparative example were characterized by the same method. The corresponding characterization results are shown in Table. 1.

**Table 1. Structural parameters of positive electrode materials in Examples 1 -12 and Comparative Examples 1-3**

| Experimental group | Average particle size of primary particles/µm | Particle size of secondary particle/µm | Diameter ratio | Cladding rate/% | Thickness of cladding layer/nm |
|---|---|---|---|---|---|
| Example 1 | 1.48 | 3.55 | 2.4 | 12 | 5 |
| Example 2 | 0.55 | 3.63 | 6.6 | 19 | 11 |
| Example 3 | 1.81 | 3.4 | 1.9 | 37 | 33 |
| Example 4 | 1.89 | 8.12 | 4.3 | 37 | 15 |
| Example 5 | 0.65 | 3.27 | 5 | 44 | 19 |
| Example 6 | 1.22 | 11.24 | 9.2 | 28 | 15 |
| Example 7 | 0.53 | 5.28 | 10 | 43 | 17 |
| Example 8 | 1.28 | 12.3 | 9.8 | 26 | 39 |
| Example 9 | 1.86 | 3.84 | 2.1 | 62 | 2 |
| Example 10 | 0.66 | 7.19 | 10.8 | 58 | 20 |
| Example 11 | 0.83 | 9.86 | 17.3 | 82 | 8 |
| Example 12 | 0.2 | 13.4 | 67 | 85 | 12 |
| Comparative Example 1 | 3.25 | 3.46 | ~1 | 0 | 0 |
| Comparative Example 2 | 1.42 | 3.84 | 2.6 | 0 | 0 |
| Comparative Example 3 | 2.72 | 3.42 | 1.3 | 87 | 48 |

The positive electrode material of Example 4 was characterized by X-ray diffraction, and the diffraction pattern was analyzed. FIG, 4 is an XRD pattern of the positive electrode material provided in Example 4 of the present disclosure. As can be seen, the positive electrode material of Example 4 has a high degree of crystallization, the stability of the material is good, and the full width at half maximum FWHM of the diffraction peak of the (104) crystal plane of the positive electrode material is 0.117. The positive electrode materials of each example and comparative example were characterized by the same method. The corresponding characterization results are shown in Table. 2.

**Table 2. Structural parameters of positive electrode materials in Examples 1 -12 and Comparative Examples 1-3**

| Experimental group | Full width at half maximum of diffraction peak of (104) crystal plane |
|---|---|
| Example 1 | 0.115 |
| Example 2 | 0.105 |
| Example 3 | 0.228 |
| Example 4 | 0.117 |
| Example 5 | 0.158 |
| Example 6 | 0.136 |
| Example 7 | 0.100 |
| Example 8 | 0.136 |
| Example 9 | 0.217 |
| Example 10 | 0.117 |
| Example 11 | 0.115 |
| Example 12 | 0.115 |
| Comparative Example 1 | 0.124 |
| Comparative Example 2 | 0.132 |
| Comparative Example 3 | 0.208 |

The batteries of each example and comparative example were tested for charge and discharge cycles. Test conditions for discharge rate: The battery in 100% SOC was discharged to 2.5V at 5C and 25°C. The ratio of the discharge capacity to nominal capacity was recorded, to obtain the discharge rate of the battery. Test conditions for capacity retention rate: After 2000 charge-discharge cycles of the battery at 100% depth of discharge (DOD) and 1C, the capacity retention rate of the battery was calculated. The test results are shown in Table 3.

**Table 3. Performance of batteries in Examples 1-12 and Comparative Examples 1-3**

| Experimental group | Discharge rate/% | Capacity retention rate/% |
|---|---|---|
| Example 1 | 0.8271 | 83 |
| Example 2 | 0.7651 | 74 |
| Example 3 | 0.6892 | 73 |
| Example 4 | 0.7553 | 88 |
| Example 5 | 0.8719 | 88 |
| Example 6 | 0.8975 | 90 |
| Example 7 | 0.8201 | 72 |
| Example 8 | 0.7529 | 73 |
| Example 9 | 0.659 | 71 |
| Example 10 | 0.9016 | 90 |
| Example 11 | 0.8176 | 85 |
| Example 12 | 0.8851 | 89 |
| Comparative Example 1 | 0.5016 | 48 |
| Comparative Example 2 | 0.6351 | 51 |
| Comparative Example 3 | 0.4537 | 78 |

In Table 3, the cladding rate of the rock-salt phase cladding layer of the positive electrode material in Examples 1 and 2 is less than 20%. In the positive electrode material of Example 1, the particle size ratio of the secondary particle to the primary particle are appropriate, which facilitates the diffusion of lithium ions; and the rock-salt phase cladding layer and the secondary particle are well matched, so that the positive electrode material has good structural stability, and the battery has good cycle performance and rate performance. The cladding rate of the rock-salt phase cladding layer of the positive electrode material in Examples 3-8 ranges from 20% to 50%. The particle size ratio of the secondary particle to the primary particle in the positive electrode material of Example 3 is relative small, and the cladding layer is too thick, so that the migration performance of lithium ions is reduced, and the rate performance and cycle performance of the battery are poor. In the positive electrode material of Example 5, the structure of the cladding layer and the secondary particle are well matched, and the obtained battery has not only high discharge rate, but also good cycle performance. In the positive electrode material of Example 8, the thickness of the cladding layer is large, reducing the rate performance of the material.

The cladding rate of the rock-salt phase cladding layer of the positive electrode material in Examples 9 and 10 ranges from 50% to 80%. In the positive electrode material of Example 10, the particle size ratio of the secondary particle to the primary particle is appropriate, which facilitates the diffusion of lithium ions; and the structures of the cladding layer and the secondary particle are well matched, so that the positive electrode material has good structural stability, and the battery has good cycle performance and rate performance. The cladding rate of the rock-salt phase cladding layer of the positive electrode material in Examples 11 and 12 are greater than 80%. In the positive electrode material of Example 12, the particle size ratio of the secondary particle to the primary particle is appropriate, which facilitates the diffusion of lithium ions; and the structures of the cladding layer and the secondary particle are well matched, so that the positive electrode material has good structural stability, and the battery has good cycle performance and rate performance.

The positive electrode material of Comparative Example 1 has no cladding layer and is formed of primary particles, so the cycle performance and rate performance of the obtained battery are poor. The positive electrode material of Comparative Example 2 is formed of secondary particles, and the migration rate of lithium ions is improved somewhat. However, due to the absence of the cladding layer, the electrolyte retention capacity of the particles is poor, the contact area between the positive electrode material and the electrolyte solution is limited, the lithium ion migration is disordered, the structural stability of the electrode material is poor, and the cycle performance and rate performance of the battery are poor. The cladding rate and cladding thickness of the positive electrode material in Comparative Example 3 are too large, and the particle size ratio of the secondary particle to the primary particles is extremely low, causing that the migration of lithium ions is difficult and the discharge rate of the battery is very poor.

As can be seen, the positive electrode material provided in the present disclosure can effectively improve the rate performance and cycle performance of the battery, promoting its use in batteries.

Some embodiments of the present disclosure have been described above, but which cannot be understood as a limitation on the scope of the present disclosure. It should be noted that several improvements and modifications can be made by those of ordinary skill in the art without departing from the principle of the present disclosure, which shall fall within the protection scope of the present disclosure.

## Claims

1. A positive electrode material, comprising:
a secondary particle, the secondary particle being formed by stacking multiple primary particles; and
a rock-salt phase cladding layer provided on the surface of the secondary particle, the ratio of the particle size of the secondary particle to an average particle size of the multiple primary particles being greater than or equal to 1.5, and the primary particles and the rock-salt phase cladding layer respectively comprising a nickel-based active material.

2. The positive electrode material according to claim 1, wherein the nickel-based active material comprises a material of chemical formula Li₁₋ₐA_{b}(NiₘM₁₋ₘ)XₓO₂Z_{z}, wherein -0.1≤a≤0.1, A comprises one or more of Na, K, Be, Mg, Ca, and B, 0≤b≤0.1, M comprises one or more of Mn, Co, and Al, 0<m≤1, X comprises one or more of Zr, V, Ti, Cr, Fe, Co, Ni, Zn, Nb, Mo, Os, W, and Y, 0≤x≤0.1, Z comprises one or more of F, Cl, Br, and I, and 0≤z≤0.1.

3. The positive electrode material according to claim 1, wherein the cladding rate of the rock-salt phase cladding layer on the surface of the secondary particle ranges from 10% to 90%.

4. The positive electrode material according to claim 3, wherein
when the cladding rate is less than or equal to 20%, the ratio r of the particle size of the secondary particle to the average particle size of the multiple primary particles meets 1.5≤r≤3;
when the cladding rate is greater than 20% and less than or equal to 50%, the ratio r of the particle size of the secondary particle to the average particle size of the multiple primary particles meets 3<r≤10;
when the cladding rate is greater than 50% and less than or equal to 80%, the ratio r of the particle size of the secondary particle to the average particle size of the multiple primary particles meets 10<r≤50; and
when the cladding rate is greater than 80%, the ratio r of the particle size of the secondary particle to the average particle size of the multiple primary particles meets r>50.

5. The positive electrode material according to any one of claims 1 to 4, wherein the cladding rate of the rock-salt phase cladding layer on the surface of the secondary particle ranges from 50% to 80%.

6. The positive electrode material according to any one of claims 1 to 5, wherein the particle size of the secondary particle is less than or equal to 15 µm.

7. The positive electrode material according to any one of claims 1 to 6, wherein the thickness of the rock-salt phase cladding layer ranges from 1 nm to 20 nm.

8. The positive electrode material according to any one of claims 1 to 7, wherein the thickness of the rock-salt phase cladding layer ranges from 5 nm to 15 nm.

9. The positive electrode material according to any one of claims 1 to 8, wherein the secondary particle has a layered hexagonal close-packed structure, belonging to space group R3m; and in the X-ray diffraction pattern of the positive electrode material, the full width at half maximum of the diffraction peak of the (104) crystal plane of the positive electrode material is 0.1-0.2.

10. The positive electrode material according to claim 9, wherein the full width at half maximum of the diffraction peak of the (104) crystal plane of the positive electrode material is 0.105-0.130.

11. The positive electrode material according to any one of claims 1 to 10, wherein the rock-salt phase cladding layer and the nickel-based active material respectively comprise doped or undoped lithium nickel cobalt manganese oxide.

12. The positive electrode material according to claim 11, wherein the undoped lithium nickel cobalt manganese oxide has a chemical formula of Li(NiₘCoₙMn₁₋ₘ₋ₙ)O₂, wherein 0<m<1, 0<n<1, and 0<m+n<1.

13. The positive electrode material according to claim 11 or 12, wherein the doping element in the doped lithium nickel cobalt manganese oxide comprises one or more of Na, K, Be, Mg, Ca, B, Zr, V, Ti, Cr, Y, Fe, Co, Ni, Zn, Nb, Mo, Os, W, F, Cl, Br and I.

14. The positive electrode material according to any one of claims 11 to 13, wherein the doped or undoped lithium nickel cobalt manganese oxide has a chemical formula of Li₁₋ₐA_{b}(NiₘCoₙMn₁₋ₘ₋ₙ)XₓO₂Z_{z}, wherein -0.1≤a≤0.1, A comprises one or more of Na, K, Be, Mg, Ca, and B, 0≤b≤0.1, X comprises one or more of Zr, V, Ti, Cr, Fe, Co, Ni, Zn, Y, Nb, Mo, Os, and W, 0≤x≤0.1, Z comprises one or more of F, Cl, Br, and I, and 0≤z≤0.1.

15. A positive electrode sheet, comprising a current collector and a positive electrode material according to any one of claims 1 to 14 provided on the current collector.

16. A secondary battery, comprising:
a positive electrode, the positive electrode comprising a positive electrode sheet according to claim 15; and
a negative electrode.

17. The secondary battery according to claim 16, further comprising an electrolyte solution and a separator located between the positive electrode and the negative electrode.

18. The secondary battery according to claim 16, further comprising a solid electrolyte or a semi-solid electrolyte located between the positive electrode and the negative electrode.

19. A vehicle, comprising a secondary battery according to any one of claims 16 to 18.
